# EUROPÄISCHE PATENTSCHRIFT

(11) **EP 2 971 939 B1**
(45) Veröffentlichungstag und Bekanntmachung des Hinweises auf die Patenterteilung: **05.05.2021**
(21) Anmeldenummer: 14714573.4
(22) Anmeldetag: 05.03.2014
(51) Int. Cl.: F21V 29/00, F21V 19/00, F21S 41/148, F21S 41/19, F21S 41/33, F21S 41/39, F21S 45/48, F21W 102/155, F21S 41/151

(54) **LICHTMODUL FÜR EINEN FAHRZEUGSCHEINWERFER**
LIGHT MODULE FOR A VEHICLE HEADLAMP
MODULE D'ÉCLAIRAGE POUR PROJECTEUR DE VÉHICULE

(30) Priorität: 13.03.2013 AT 501702013
(43) Veröffentlichungstag der Anmeldung: 20.01.2016
(73) Patentinhaber: ZKW Group GmbH, 3250 Wieselburg (AT)
(72) Erfinder: ZORN, Jürgen, A-3511 Oberfucha (AT)
(74) Vertreter: Patentanwaltskanzlei Matschnig & Forsthuber OG
(86) Internationale Anmeldenummer: PCT/AT2014/050051
(87) Internationale Veröffentlichungsnummer: WO 2014/138763

(56) Entgegenhaltungen:
- EP-A2- 2 375 142
- DE-A1-102007 050 893
- US-A1- 2012 294 024
- US-A1- 2013 051 058
- US-A1- 2013 051 059

## Beschreibung

Die Erfindung betrifft ein Lichtmodul für einen Fahrzeugscheinwerfer, wobei das Lichtmodul einen Kühlkörper und eine Mehrzahl von auf dem Kühlkörper festgelegten Leuchteinheiten jeweils umfassend zumindest eine Lichtquelle, einen Lichtquellenträger und eine am Lichtquellenträger festgelegte Reflektoreinheit aufweist.

Moderne Fahrzeugscheinwerfer bieten zumeist eine Mehrzahl von Lichtfunktionen wie beispielsweise Abblendlicht, Fernlicht, Teilfernlicht, Tagfahrlicht etc., wobei diese Funktionen von einer Mehrzahl von Leuchteinheiten eines Lichtmoduls eines Fahrzeugscheinwerfers dargestellt werden. Gesetzliche Auflagen erfordern es, dass die von den verschiedenen Lichtfunktionen ausgehenden Lichtkegel genau aufeinander eingestellt und positioniert sind, was insbesondere bei Funktionalitäten wie dem in letzter Zeit immer beliebter werdenden Teilfernlicht nachvollziehbar ist, bei dem ein kräftiges Lichtfeld in einer Höhe abgebildet wird, in der zweifellos eine Blendung des Gegenverkehrs erfolgen würde, wenn die vertikale Hell-Dunkel Grenze dieser Lichtfunktion nicht genau an einer Stelle verlaufen würde, ab der auch für ein asymmetrisches Abblendlicht eine relativ hohe Abstrahlrichtung zugelassen ist. Bisher wurde die Einstellung der einzelnen Lichtfunktionen zueinander mit Hilfe von aufwendigen Einstellmechaniken bewerkstelligt, die jeweils zur gelenkigen Lagerung der einzelnen Leuchteinheiten vorgesehen sein mussten, was naturgemäß den Produktions- und Montageaufwand der Lichtmodule und somit die Kosten der Fahrzeugscheinwerfer erhöhte
Fahrzeugscheinwerfer sind aus US 2013/051059 A1 und aus US 2013/051058 bekannt.

Es ist daher Aufgabe der vorliegenden Erfindung, ein Lichtmodul zu schaffen, bei dem zur Abstimmung der einzelnen Lichtfunktionen zueinander auf derartige Einstellvorrichtungen verzichtet werden kann, wobei jedoch insbesondere die oben beschriebene, besonders wichtige horizontale Verschwenkbarkeit einer Leuchteinheit gewährleistet sein soll.

Zur Lösung dieser Aufgabe ist ein Lichtmodul der eingangs genannten Art erfindungsgemäß dahingehend weitergebildet, dass zumindest eine Leuchteinheit mit dem Lichtquellenträger auf einer horizontalen Auflagefläche des Kühlkörpers drehbar aufliegt, wobei die Lichtquelle dieser drehbaren Leuchteinheit von zumindest einer LED gebildet ist und deren Lichtquellenträger von einer Platine gebildet ist. Die Erfinder haben aus der Erfahrung, dass vor allem die horizontale Verschwenkbarkeit zumindest einer Leuchteinheit des Lichtmoduls zur Abstimmung der Lichtfunktionen eines Lichtmoduls zueinander notwendig ist, zum Anlass genommen, auf die komplizierte Einstellmechanik zu verzichten und für die horizontale Verschwenkbarkeit eine ohnehin vorhandene, in Einbaulage des Scheinwerfers sich horizontal erstreckende Fläche des Kühlkörpers als Drehebene zu verwenden. Derartige Kühlkörper finden bei modernen Hochleistungsscheinwerfern bzw. Lichtmodulen häufig Verwendung, um die Wärme, die von der Lichtquelle produziert wird und die sehr konzentriert und über lange Zeiträume auftritt, abzuführen und stehen daher mit dem Lichtquellenträger in thermischem und somit mehr oder minder vollflächigem Kontakt. Durch die feste Verbindung zwischen Lichtquelle, Lichtquellenträger und Reflektor verhalten sich diese Teile als statische Einheit, sodass durch entsprechende Verdrehung in der horizontalen Ebene auf der Fläche des Kühlkörpers eine einfache und zuverlässige Zueinanderstellung der Lichtfunktionen gelingt. Der Verzicht auf die Einstellmechanik erweist sich hierbei nicht nur als kostengünstig, sondern auch als kompakt und stabil, sodass auch bei klein bauenden Scheinwerfern volle Funktionalität bei einem besonders ruhigen Lichtbild erzielt wird.

Die Lichtquelle ist von zumindest einer LED gebildet und der Lichtquellenträger ist von einer Platine gebildet. Die Verwendung der LED-Technologie in der Fahrzeugtechnik bietet erhebliche Vorteile hinsichtlich Baugröße und damit einhergehend gestalterischer Freiheit, Langlebigkeit der Lichtquellen und Lichtausbeute, erfordert jedoch unbedingt den Einsatz von Kühlkörpern für die Platinen bzw. Leiterplatten, auf denen die LEDs angeordnet sind, um die hochkonzentriert auftretenden Wärmemengen abzuführen. In Einbaulage erstreckt sich die Auflagefläche des Kühlkörpers horizontal und da die LED in der Regel flach auf die auf der Auflagefläche aufliegende Platine aufgelötet ist, strahlt die LED nach oben und zur Seite. Mit einem entsprechend geformten Reflektor wird das Licht in Abstrahlrichtung umgelenkt. Die Platine liegt hierbei für einen möglichst wirkungsvollen thermischen Kontakt flächig auf der Auflagefläche des Kühlkörpers auf und kann erfindungsgemäß verdreht werden.

Gemäß einer bevorzugten Ausführungsform der vorliegenden Erfindung weist die Platine eine Bohrung auf, die zur drehbaren Lagerung der zumindest einen Leuchteinheit mit einem entsprechenden Zapfen am Kühlkörper zusammenwirkt. Dies stellt eine einfache Lösung für das Problem dar, die Verdrehung des Lichtquellenträgers auf dem Kühlkörper um eine definierte Achse zu bewerkstelligen.

Um die einmal eingestellte Verdrehposition zu fixieren, ist die Erfindung mit Vorteil dahingehend weitergebildet, dass das Lichtmodul Fixierschrauben zur Fixierung der zumindest einen drehbar festlegbaren Leuchteinheit umfasst. Nachdem die Verdrehposition zur Abstimmung der Lichtfunktionen zueinander eingestellt ist, kann gemäß dieser bevorzugten Ausführungsform der Erfindung die endgültige Festlegung der Einstellung mit Hilfe der Fixierschrauben erfolgen.

Bevorzugt ist zwischen dem Kühlkörper und dem Lichtquellenträger eine Klebeschicht angeordnet. Eine solche Klebeschicht ist zum Einen geeignet, die endgültige Festlegung alternativ oder zusätzlich zu den oben genannten Fixierschrauben zu gewährleisten und andererseits kann bei entsprechender Wahl des Klebermaterials der Wärmeübergang zwischen der Platine bzw. dem Lichtquellenträger und dem Kühlkörper verbessert werden.

Gemäß einer weiteren bevorzugten Ausführungsform der vorliegenden Erfindung ist die Reflektoreinheit mit dem Lichtquellenträger verklebt. In diesem Fall ist es nicht notwendig, die Reflektoreinheit mit dem Lichtquellenträger durch Verschrauben zu verbinden, was aufgrund des Drucks der Schrauben zu Verformungen des Reflektors und somit zu einer Beeinträchtigung des Lichtbilds führen kann.

Die Erfindung wird nachfolgend anhand eines in der Zeichnung dargestellten Ausführungsbeispiels näher erläutert. In dieser zeigen
Fig. 1 eine perspektivische Darstellung zweier Leuchteinheiten auf einem Kühlkörper eines erfindungsgemäßen Lichtmoduls
Fig. 2 eine perspektivische teilweise Explosionsdarstellung einer Leuchteinheit und eines Kühlkörpers eines erfindungsgemäßen Lichtmoduls
Fig. 3 eine weitere perspektivische teilweise Explosionsdarstellung einer Leuchteinheit und eines Kühlkörpers eines erfindungsgemäßen Lichtmoduls
Fig. 4 eine perspektivische Ansicht einer Leuchteinheit auf einem Kühlkörper eines erfindungsgemäßen Lichtmoduls
Fig. 5 eine Darstellung einer Platine auf einer Auflagefläche des Kühlkörpers des erfindungsgemäßen Lichtmoduls,
Fig. 6 eine perspektivische Darstellung eines erfindungsgemäßen Lichtmoduls und
Fig. 7 eine schematische Darstellung der Einstellungsmöglichkeit der Hell-Dunkel Grenze eines Teilfernlichts

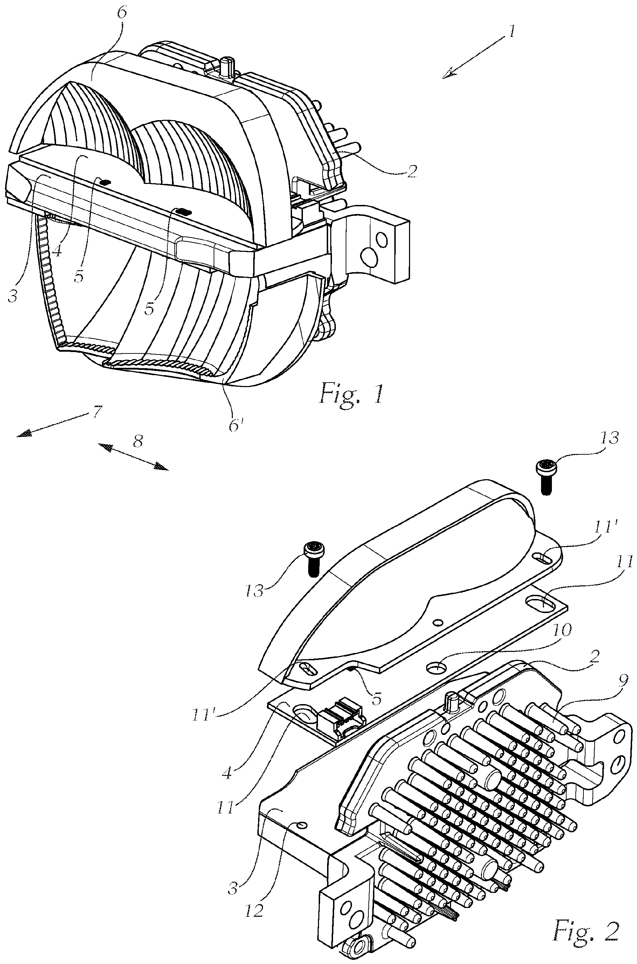

In Fig. 1 ist mit 1 ein erfindungsgemäßes Lichtmodul bezeichnet, das in Fig. 1 nur teilweise dargestellt ist. Das Lichtmodul 1 weist einen Kühlkörper 2 auf, der eine mit 3 bezeichnete Auflagefläche für eine Platine bzw. einen Lichtquellenträger 4 aufweist. Die Platine 4 trägt die Lichtquellen bzw. LEDs 5, deren Licht von der Reflektoreinheit 6 in die durch den Pfeil 7 versinnbildlichte Richtung abgestrahlt wird. Es ist offensichtlich, dass sich die Auflagefläche 3 im Einbauzustand des Lichtmoduls 1 bzw. des nicht weiter dargestellten Scheinwerfers in ein Fahrzeug im Wesentlichen horizontal erstreckt, sodass eine Verdrehung in der Ebene der Auflagefläche 3 im Sinne des Doppelpfeils 7 zu einer Verschiebung des von der Leuchteinheit abgestrahlten Lichtbilds in durch den Doppelfeil 8 versinnbildlichten seitlichen Richtungen erfolgt. Der Auflagefläche 3 gegenüberliegend ist eine weitere Auflagefläche angeordnet, auf der eine weitere Platine mit Lichtquellen und Reflektoreinheit 6' angeordnet ist. Für die Zwecke der vorliegenden Erfindung ist es ausreichend, wenn lediglich eine Leuchteinheit bestehend aus Platine 4, Lichtquelle bzw. Lichtquellen 5 und Reflektoreinheit 6 drehbar auf dem Kühlkörper 2 bzw. der Auflagefläche 3 des Kühlkörpers 2 festgelegt ist, es ist jedoch auch denkbar, dass alle auf einem Kühlkörper 2 angeordneten Leuchteinheiten derart drehbar festgelegt sind.

In Fig. 2 ist zu erkennen, dass der Kühlkörper 2 an der der Auflagefläche 3 abgewandten Seite eine Vielzahl von Kühlelementen 9 aufweist, um die von den LEDs 5 erzeugte Wärme abzustrahlen. Die Platine 4 verfügt über eine Bohrung 10, die mit einem in Fig. 2 nicht dargestellten Zapfen zur Realisierung einer drehbaren Festlegung auf dem Kühlkörper 2 zusammenwirkt. Mit 11 sind Langlöcher bezeichnet, die mit Bohrungen 12 in der Auflagefläche 3 des Kühlkörpers 2 in Deckung bringbar sind, sodass eine Fixierung der Platine 4 auf der Auflagefläche 3 des Kühlkörpers 2 mit Hilfe der Fixierschrauben 13 erfolgen kann. Es sind entsprechende Langlöcher 11' an der Reflektoreinheit 6 vorgesehen. Diese Langlöcher 11' können jedoch deutlich vergrößert sein, um eine Freistellung für die Köpfe der Fixierschrauben 13 zu schaffen, wenn die Festlegung der Reflektoreinheit 6 an der Platine 4 durch Verklebung erfolgt.

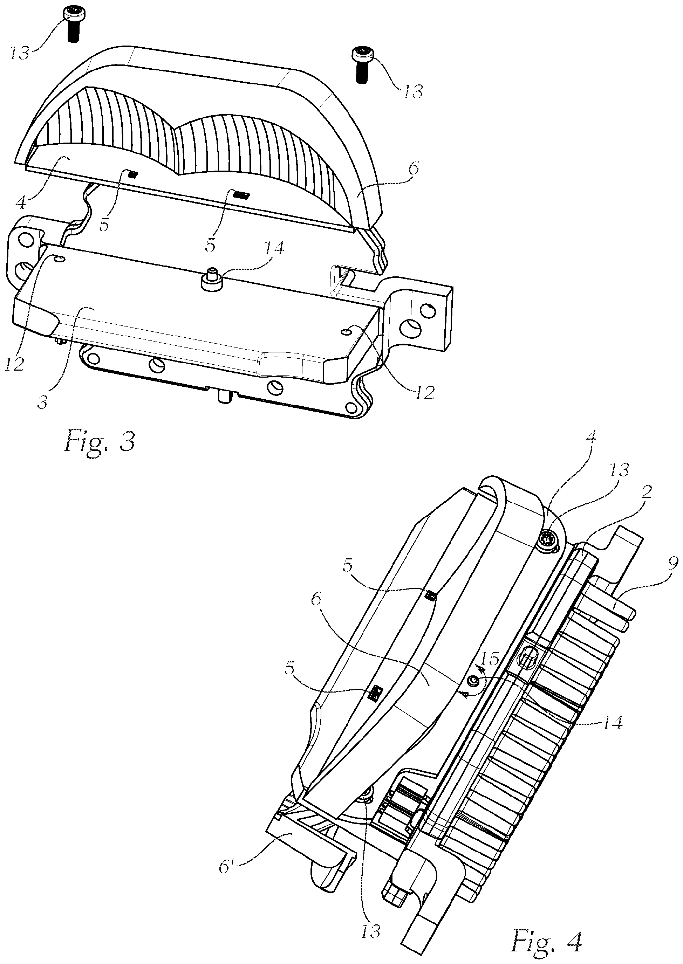

In Fig. 3 ist nun der Zapfen 14 zu erkennen, der mit der in Fig. 2 sichtbaren Bohrung 10 zur verdrehbaren Lagerung der Platine 4 zusammenwirkt. Im vorliegenden Beispiel ist die Reflektoreinheit 6 mit der Platine 4 verklebt.

In der Darstellung nach Fig. 4 ist ersichtlich, dass zwischen der Platine 4 und dem Kühlkörper 2 nur ein relativ schmaler Spalt vorgesehen ist, sodass die Verdrehbarkeit im Sinne des Doppelpfeils 15 nur in einem relativ stark eingeschränktem Maße möglich ist. Für die Zwecke der vorliegenden Erfindung ist diese beschränkte Verdrehbarkeit jedoch völlig ausreichend.

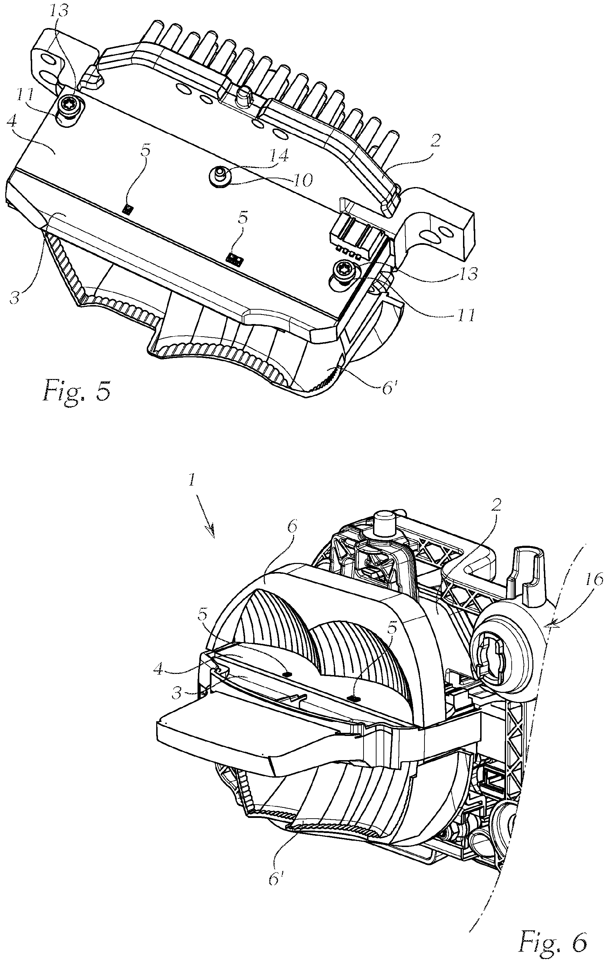

In Fig. 5 ist nun zur weiteren Verdeutlichung die Platine 4 in einer festgelegten Position ohne die Reflektoreinheit 6 dargestellt. Die Platine 4 liegt vollflächig auf der Auflagefläche 3 des Kühlkörpers 2 auf, um die Wärme, die von den LEDs 5 produziert wird, auf den Kühlkörper 2 zu übertragen. Die Langlöcher 11 in der Platine gestatten eine Fixierung der Verdrehposition der Platine 4 in verschiedenen Verdrehpositionen. Die Platine 4 ist beim Verdrehen durch die Bohrung 10 und den Zapfen 14 geführt.

Fig. 6 zeigt das erfindungsgemäße Lichtmodul in einem größeren Kontext und es ist besonders deutlich zu erkennen, dass gegenüber der Auflagefläche 3 eine weitere Auflagefläche vorgesehen sein kann, auf der eine wie eben beschriebene Leuchteinheit mit Platine, Lichtquellen und Reflektoreinheit 6' verdrehbar oder nicht verdrehbar festgelegt ist. Für die Zwecke der Erfindung reicht es aus, wenn nur eine Leuchteinheit relativ zur anderen verdrehbar ist. 16 bezeichnet einen Tragrahmen für das Lichtmodul 1.

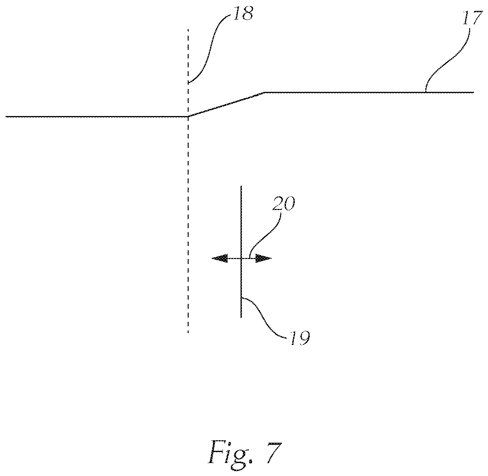

Das Wirkung des erfindungsgemäßen Lichtmoduls hinsichtlich des Lichtbilds ist in Fig. 7 ersichtlich. Die Linie 17 stellt eine im Wesentlichen horizontal verlaufende Hell-Dunkel Grenze eines Abblendlichts dar, wobei diese Hell-Dunkel Grenze asymmetrisch verläuft und ab einem Bereich, der durch die strichlierte Linie 18 bezeichnet ist, ansteigt. Eine Hell-Dunkel Grenze eines Teilfernlichts ist durch die Linie 19 dargestellt. Bei der vorliegenden Erfindung wird das Abblendlicht durch die in den vorangehenden Figuren dargestellte feststehende Reflektoreinheit 6' projiziert. Bei der Einstellung bzw. Abstimmung des Lichtmoduls erfolgt durch die Verdrehbarkeit der Platine 4 auf der Auflagefläche 3 des Kühlkörpers 2 eine Verschiebung der Linie 19, welche der Hell-Dunkel Grenze des Teilfernlichts entspricht im Sinne des Doppelpfeils 20, sodass die Linie 19 beispielsweise mit der Linie 18 in Deckung gebracht werden kann. Mit dieser Einstellung wird auch bei Verwendung des Teilfernlichts eine Blendung des Gegenverkehrs vermieden.

## Patentansprüche

1. Lichtmodul (1) für einen Fahrzeugscheinwerfer, wobei das Lichtmodul (1) einen Kühlkörper (2) und eine Mehrzahl von auf dem Kühlkörper (2) festlegbaren Leuchteinheiten jeweils umfassend zumindest eine Lichtquelle (5), einen Lichtquellenträger (4) und eine am Lichtquellenträger (4) festgelegte Reflektoreinheit (6,) aufweist, wobei zumindest eine der Leuchteinheiten mit dem Lichtquellenträger (4) auf einer horizontalen Auflagefläche (3) des Kühlkörpers (2) drehbar aufliegt,
**dadurch gekennzeichnet, dass**, in der zumindest einen der Leuchteinheiten, die Lichtquelle (5) von zumindest einer LED (5) gebildet ist und der Lichtquellenträger (4) von einer Platine (4) gebildet ist.

2. Lichtmodul nach Anspruch 1, **dadurch gekennzeichnet, dass** die Platine (4) eine Bohrung (10) aufweist, die zur drehbaren Lagerung der zumindest einen Leuchteinheit mit einem entsprechenden Zapfen (14) am Kühlkörper (2) zusammenwirkt.

3. Lichtmodul nach einem der Ansprüche 1 bis 2, **dadurch gekennzeichnet, dass** das Lichtmodul (1) Fixierschrauben (13) zur Fixierung der zumindest einen drehbar festlegbaren Leuchteinheit umfasst.

4. Lichtmodul nach einem der Ansprüche 1 bis 3, **dadurch gekennzeichnet, dass** zwischen dem Kühlkörper (2) und dem Lichtquellenträger (4) eine Klebeschicht angeordnet ist.

5. Lichtmodul nach einem der Ansprüche 1 bis 4, **dadurch gekennzeichnet, dass** die Reflektoreinheit (6) mit dem Lichtquellenträger (4) verklebt ist.

## Claims

1. Light module (1) for a vehicle headlamp, the light module (1) having a heat sink (2) and a plurality of light units fixed on the heat sink (2), each comprising at least one light source (5), a light source support (4) and a reflector unit (6) fixed on the light source support, at least one of the light units resting rotatably with the light source support (4) on a horizontal bearing surface (3) of the heat sink (2),
**characterized in that** in the at least one of the light units, the light source (5) is formed by at least one LED (5) and the light source carrier (4) is formed by a circuit board (4).

2. Light module according to claim 1, **characterized in that** the circuit board (4) has a bore (10) which cooperates with a corresponding pin (14) on the heat sink (2) for the rotatable mounting of the at least one light unit.

3. Light module according to one of the claims 1 to 2, **characterized in that** the light module (1) comprises fixing screws (13) for fixing the at least one rotatably fixable light unit.

4. Light module according to one of claims 1 to 3, **characterized in that** an adhesive layer is arranged between the heat sink (2) and the light source carrier (4).

5. Light module according to one of claims 1 to 4, **characterized in that** the reflector unit (6) is bonded to the light source carrier (4).

## Revendications

1. Module d'éclairage (1) pour un phare de véhicule, le module d'éclairage (1) comportant un dissipateur thermique (2) et plusieurs unités d'éclairage fixées sur le dissipateur thermique (2), chacune comprenant au moins une source lumineuse (5), un support de source lumineuse (4) et une unité de réflecteur (6) fixée sur le support de source lumineuse, au moins une des unités d'éclairage reposant de manière rotative avec le support de source lumineuse (4) sur une surface d'appui horizontale (3) du dissipateur thermique (2),
**caractérisé en ce que**, dans au moins une des unités lumineuses, la source lumineuse (5) est formée par au moins une LED (5) et le support de source lumineuse (4) est formé par une carte de circuit imprimé (4).

2. Module d'éclairage selon la revendication 1, **caractérisé en ce que** la carte de circuit imprimé (4) présente un alésage (10) qui coopère avec une broche correspondante (14) sur le dissipateur thermique (2) pour le montage rotatif de l'au moins une unité d'éclairage.

3. Module d'éclairage selon l'une des revendications 1 à 2, **caractérisé en ce que** le module d'éclairage (1) comprend des vis de fixation (13) pour fixer au moins une unité d'éclairage pouvant être fixée de manière rotative.

4. Module d'éclairage selon l'une des revendications 1 à 3, **caractérisé en ce qu'**une couche adhésive est disposée entre le dissipateur thermique (2) et le support de la source lumineuse (4).

5. Module d'éclairage selon l'une des revendications 1 à 4, **caractérisé en ce que** l'unité de réflecteur (6) est collée au support de la source lumineuse (4).
